# EUROPEAN PATENT APPLICATION

(11) **EP 2 700 794 A2**
(43) Date of publication of application: **26.02.2014**
(21) Application number: 13181181.2
(22) Date of filing: 21.08.2013
(51) Int. Cl.: F01N 3/20, F01N 3/28, F01N 5/02, F01K 23/06, F02G 5/02, F02B 41/00

(54) **Exhaust system**

(30) Priority: 22.08.2012 SE 1250939
(71) Applicant: Scania CV AB (publ), 151 87 Södertälje (SE)
(72) Inventor: Dellrud, Jan, SE-646 94 BJÖRNLUNDA (SE)

(57) **Abstract**

An exhaust system designed for connection to a combustion engine of a motor vehicle, which system comprises a catalytic converter (12) and a heat exchanger (13) arranged in a flow path for exhaust gases from the engine to an outlet to the surroundings of the vehicle. The arrangement comprises means (14) for defining at least two alternative flow paths for exhaust gases from the engine to the outlet, a first with the heat exchanger (13) arranged downstream of the catalytic converter (12) and a second with the heat exchanger (13) arranged upstream of the catalytic converter (12). The determination as to which of said alternative flow paths the exhaust gases are to be conducted in is made on the basis of a measured operating parameter of the exhaust system.

## Description

### TECHNICAL FIELD OF THE INVENTION AND PRIOR ART

The invention concerns an exhaust system designed to be connected to a combustion engine in a motor vehicle according to the preamble to accompany claim 1 and a method according to the preamble to the accompanying independent method claims.

The invention is intended in particular but not exclusively for an exhaust system in motor vehicles in the form of a wheel-borne utility vehicles such as goods vehicles and buses, although all types of motor vehicles, such as cars, boats and the like, are also encompassed.

Nor is the invention limited to exhaust systems for connection to any specific type of combustion engine, and non-exhaustive examples of such possible engines include Otto engines, diesel engines and natural gas engines.

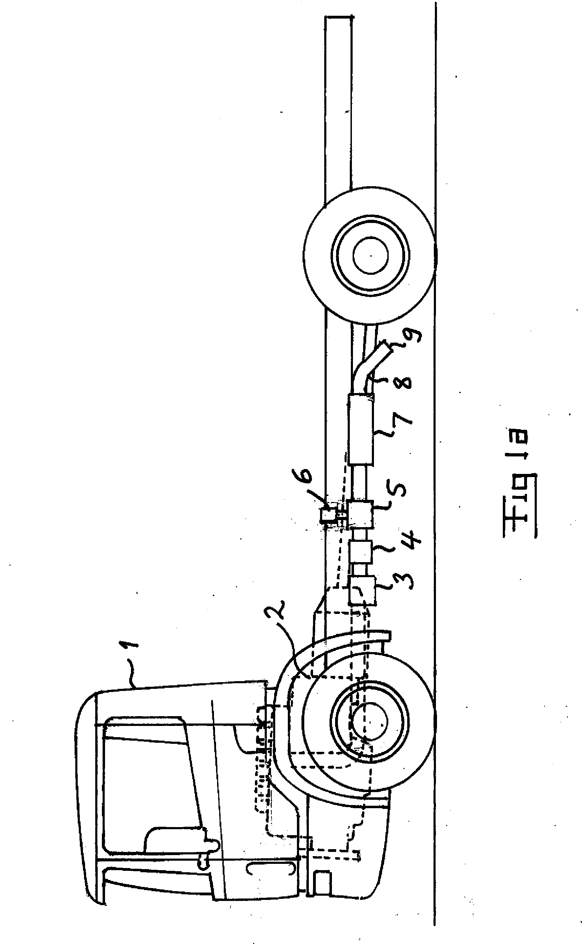

A known exhaust system of the type defined above is schematically illustrated in the accompanying Fig. 1a. Here a motor vehicle 1 in the form of a goods vehicle has a combustion engine 2 from which exhaust gases resulting from the combustion in the engine are conducted to a catalytic converter 3 having surfaces of a material, such as platinum or a combination of palladium and rhodium, with the ability to elicit a conversion of the environmentally hazardous gases in the exhaust gases, such as nitrous oxides (NOₓ), carbon monoxide (CO) and the carbohydrates into more harmless gases such as carbon dioxide (CO₂), water vapor (H₂O) and nitrogen (N₂) without itself participating in the reactions. In order for a catalyzing material to exert its catalytic effect, it must have a temperature above a certain level, which depends on the material being used as the catalyst. The choice of material depends in turn on the type of combustion engine to which the exhaust system is connected. Although only one box is shown in Fig. 1a for the catalytic converter, various types of catalytic converters fall within the scope of the invention, wherein they can consist of multiple stages in the form of catalysts for different reactions, optionally separated by means of equipment for other exhaust gas treatments. A three-way catalytic converter that directly converts said three environmentally hazardous gases and is particularly suited for gasoline engines can also be relevant.

A so-called particle filter 4 is arranged downstream of the catalytic converter to collect any soot particles that may have been formed during the combustion in the engine and cannot be released into the natural environment. This particle filter is advantageously regenerated at suitable times by means of supplying fuel to induce the soot particles to burn. It is noted that the invention also encompasses exhaust systems without particle filters, as such filters are superfluous in exhaust systems for certain types of combustion engines in which very pure exhaust gases result from the combustion, such as certain types of natural gas engines.

A heat exchanger 5 is arranged downstream of the particle filter in order to perform heat exchanging with the exhaust gases. This heat exchanging normally involves absorbing waste heat from the exhaust gases and conducting it on for suitable use, as is illustrated in box 6, which use can comprise conversion into mechanical energy to assist the forward propulsion of the vehicle or electrical energy for use in various vehicle functions. In addition, the exhaust gases are conducted on via a muffler 7 to a so-called exhaust pipe 8 with an outlet 9 to the surroundings of the vehicle.

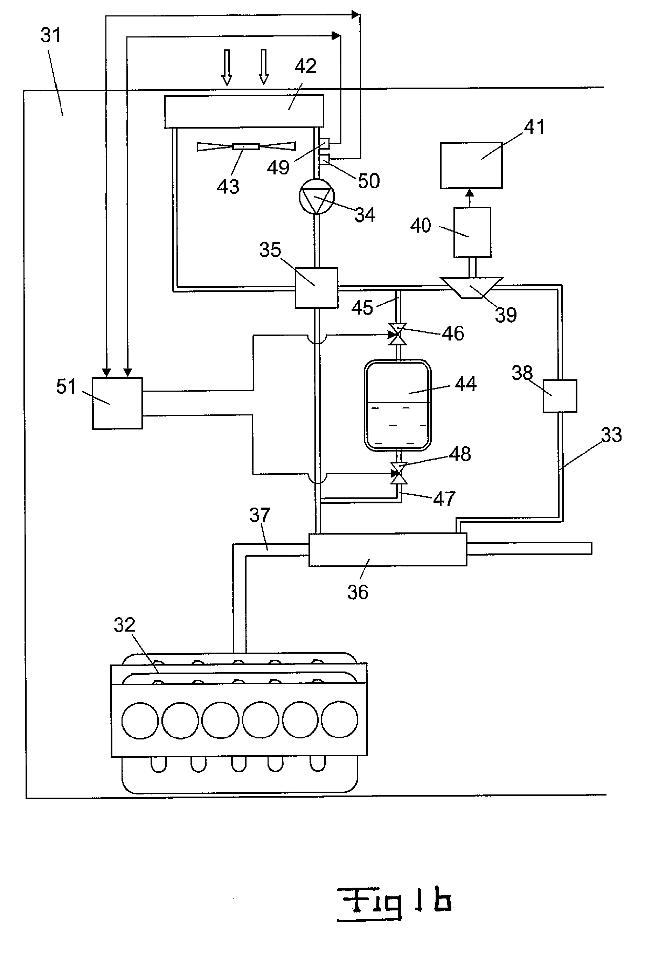

The way in which a heat recovery system for a motor vehicle can be designed is shown in greater detail in Fig. 1b, which depicts an arrangement that comprises a plurality of components that are used in a conventional WHR (Waste Heat Recovery) system. WHR systems are used in various contexts to convert thermal energy into mechanical energy. In this case the arrangement is being used to extract mechanical energy from thermal energy in exhaust gases that are being conducted from a combustion engine 32 in a schematically depicted vehicle 31. The arrangement comprises a conducting loop 33 with a circulating coolant. The coolant is in liquid form when it is compressed in the conducting loop 33 by means of a pump 34. The pump 34 conducts the coolant to a heat exchanger 35, which can be a so-called recuperator. The coolant is conducted from the heat exchanger 35 to an evaporator 36. The coolant is heated in the evaporator 36 by exhaust gases that are conducted in an exhaust gas line 37 of the combustion engine 32. The temperature and flow of the exhaust gases in the exhaust gas line 37 vary with the load on the combustion engine 32. If the combustion engine 32 is a diesel engine, the exhaust gases can have temperatures of up to 600 - 700°C.

The coolant is adapted so as to bring about a heating of the exhaust gases in the evaporator 36 so that they are vaporized. The gaseous coolant thus formed is conducted from the evaporator 36 to a superheater 38. If necessary, the coolant can undergo additional heating here in the superheater 38, so that it is ensured that all the coolant will be in gaseous form when it reaches a turbine 39. The coolant subsequent expands through the turbine 39. A portion of the thermal energy in the coolant is converted into mechanical energy here. In this case the turbine 39 is driving a generator 40. The extracted mechanical energy is thereby converted into electrical energy. The electrical energy is stored in an energy storage device 41. The stored energy can advantageously be used to operate the vehicle 31, or to operate any component in the vehicle. Alternatively, the turbine 39 can be connected by means of a flywheel or similar mechanical energy storage unit that is connectable to the drivetrain of the vehicle 31. The vehicle 31 is provided with additional propulsive force when the flywheel is connected to the drivetrain.

After the coolant has expanded in the turbine 39, it assumes a lower pressure and a lower temperature. The gaseous coolant is subsequently conducted via said heat exchanger 35, where it undergoes minor cooling. The gaseous coolant is then conducted to a condenser 42 where it is cooled to a temperature at which it condenses. In the example shown, the coolant in the condenser 42 is cooled using air at ambient temperature. A fan 43 draws in the ambient air, which is conducted through the condenser 42. The gaseous coolant then transitions into liquid form in the condenser 42. If cold cooling fluid is available, the gaseous coolant can alternatively be cooled by the cooling fluid in the condenser. The liquid coolant is drawn from the condenser 42 to the pump 34. The liquid coolant that reaches the heat exchanger 35 has a lower temperature than the gaseous coolant that is conducted through the heat exchanger in a location upstream of the condenser 42. The liquid coolant thereby undergoes minor heating in the heat exchanger before reaching the evaporator 36. The circulating coolant undergoes a pressure decrease in the turbine 39. The pump 34 applies a corresponding pressure increase to the coolant. The coolant thus has a higher pressure in that portion of the conducting loop 33 that extends from the pump 34 to the turbine 39 than in that portion of the conducting loop 33 that extends from the turbine 39 to the pump 34 with respect to the intended direction of circulation of the coolant in the cooling loop 33. The thermal energy from the exhaust gases in the exhaust gas line 37 can be conserved and converted into mechanical energy by means of the turbine 39. The mechanical energy is converted in this case into electrical energy in the generator 41. The mechanical or electrical energy is advantageously used to operate the vehicle 31. The vehicle 31 can thus acquire increased capacity without supplying additional fuel to the combustion engine 32.

The arrangement also comprises an accumulator tank 44 that stores coolant that is not being used in the conducting loop 33. The accumulator tank 44 is adapted so as to store coolant at a temperature and a pressure such that the coolant is present in suitable quantities in its liquid and gas phases in the accumulator tank 44. The arrangement comprises a first line 45 with a valve 46. The first line 45 extends from an upper portion of the accumulator tank to an area of the conducting loop 33 in which the coolant has a lower pressure than in the accumulator tank 44. When the valve 46 is opened, gaseous coolant is conducted from the accumulator tank 44 to the conducting loop 33 via the first line 45. The arrangement comprises a second line 47 with a valve 48. The second line 47 extends from a lower portion of the accumulator tank 44 to an area of the conducting loop 33 where the coolant has a higher pressure than in the accumulator tank 44. When the valve 47 is opened, liquid coolant is conducted from the conducting loop 33 to the accumulator tank 44 via the second line 47. A temperature sensor 49 and a pressure sensor 50 are arranged in the conducting loop 33 in a location downstream of the condenser 42 and upstream of the pump 34. A control unit 51 is arranged so as to receive information from the temperature sensor 49 and the pressure sensor 50 during operation. The control unit 51 is adapted so as to open one of the valves 46, 48 when the filling amount of the coolant must be adjusted in the conducting loop 33.

When the load on the combustion engine 32 changes, the exhaust gases in the exhaust gas line 37 assume a varying flow and a varying temperature. Under operating conditions in which the combustion engine 32 is heavily loaded, a heavy flow of exhaust gases at a high temperature is received via the exhaust gas line 37. Under such operating conditions, the turbine 9 can recover a relatively large amount of the thermal energy from the exhaust gases. When the combustion engine 32 is lightly loaded, a lower flow of exhaust gases at a lower temperature is received via the exhaust gas line 37. Under such operating conditions, the turbine 39 can recover significantly less thermal energy from the exhaust gases. It is nevertheless desirable to recover as much thermal energy as possible from the exhaust gases under any operating conditions. Optimal thermal energy recovery is achieved in situations where the coolant that is being conducted into the evaporator 36 is not supercooled. When this is the case, essentially no thermal energy from the exhaust gases needs to be used to heat the coolant in the evaporator 36 to its vaporization temperature, but rather essentially all the thermal energy from the exhaust gases can be used in the process of vaporizing the coolant in the evaporator 36. In this case, an optimum amount of thermal energy can be converted into mechanical energy in the turbine 39.

Previously known exhaust systems of the type described above and shown in Fig. 1a are encumbered by various problems. In many operating situations for the motor vehicle in question the exhaust gases need to maintain a relatively high temperature in order for the surfaces in the catalytic converter to reach a temperature that entails that the degree of conversion of environmentally hazardous gases therein is kept at a high level. In addition, as quick a start of the catalysis process as possible is desirable when the engine is started, in order to keep the total emissions of environmentally hazardous gases to the environment at as low a level as possible. As a result, said heat exchanger is, as shown in Fig. 1, normally disposed downstream of the catalytic converter, as is shown in, for example, US 2012102934 and US 7823798, wherein it is also possible to conduct the exhaust gases past the heat exchanger if so desired. At the same time, the catalytic converter will be aged or destroyed if the gases coming into it are at too high a temperature, and US 2011005501 and DE 102005041659 describe exhaust systems that take this into account by having a heat exchanger arranged upstream of the catalytic converter to cool the exhaust gases from the combustion engine before they reach the catalytic converter.

### SUMMARY OF THE INVENTION

The object of the present invention is to provide an exhaust system of the type defined above that is improved relative to prior art such exhaust systems in terms of addressing the aforementioned problems associated with such systems.

This object is achieved according to the invention by providing such an exhaust system in which the arrangement comprises means for defining at least two alternative flow paths for exhaust gases from the engine to the outlet; a first path with a said heat exchanger arranged downstream of the catalytic converter and a second with a said catalytic converter arranged upstream of the catalytic converter, an element designed so as to determine an operating parameter of the exhaust system and, on the basis thereof, to control said means so as to select one of said alternative flow paths in which to conduct exhaust gases.

The ability to choose the order in which the exhaust gases are to pass through a catalytic converter and a heat exchanger makes it possible to choose the order that is most suitable in each operating situation, so that the function of the catalytic converter can be improved and its service life prolonged, even as the heat exchange process involving the exhaust gases can be improved compared to prior art exhaust systems. If, for example, the surfaces of the catalytic converter are at a temperature suitable for optimum conversion and the exhaust gases arriving thereat them have a significantly higher temperature, said second flow path with the heat exchanger arranged upstream of the catalytic converter can be selected so as to avoid damage to it or a shortening of its service life, while at the same time maintaining said optimum temperature of the surfaces of the catalytic converter. Waste heat can, at the same time, be extracted from the exhaust gases. This flow path could also be chosen in the event of an engine start, when the surfaces of the catalytic converter have a temperature far lower than that required for its catalytic action, in the event that the heat exchanger is of the type having the ability to emit heat, such as a thermoelectric recovery system, so that the exhaust gases can then be heated before they reach the catalytic converter, thereby accelerating the attainment of the desired temperature by the surfaces of the catalytic converter. Once this temperature has been reached, it will be possible, if necessary, to switch to the first flow path in which the heat exchanger is arranged downstream of the catalytic converter so as to recover heat from the exhaust gases before they are released to the surroundings. The element for determining a said operating parameter of the exhaust system can be virtual and can consist, for example, of a function of said control unit which can be designed so as to calculate the operating parameter in question based on a knowledge of the amount of fuel being injected into the engine, the vehicle's operating history and similar information.

According to one embodiment of the invention, said element is designed so as to determine an operating parameter in the form of a prevailing temperature in the exhaust system. By determining, for example by measuring, the temperature of the exhaust gases, for example in the area of the catalytic converter, and utilizing knowledge of other operating parameters of the vehicle, for example, the temperature of the surfaces of the catalytic converter can be calculated with relatively great accuracy, with the result that such a measured temperature can serve as the basis for the choice of the order in which the exhaust gases are to pass through the catalytic converter and the heat exchanger.

According to another embodiment of the invention, the control unit is arranged so as to compare the determined temperature with a first predetermined temperature level and, if the determined temperature exceeds said first temperature level, to control said means to select a specific one of said alternative flow paths, which can, for example, be said second flow path in the event that the determined temperature is so high that the catalytic converter is at risk of being damaged by the hot exhaust gases.

According to another embodiment of the invention, the control unit is arranged so as to compare the determined temperature with a second predetermined temperature level and, if the determined temperature is lower than said second temperature level, to control said means to choose a specific one of said alternative flow paths. If undershooting said second predetermined temperature level indicates that the catalytic action of the catalytic converter will be deficient due to an overly low temperature of surfaces of the catalytic converter, said second flow path could be chosen in the event that the heat exchanger can be controlled so as to supply energy to the exhaust gases, while said first flow path will be selected if such is not the case and the heat exchanger is instead designed solely to absorb waste heat.

According to an additional embodiment of the invention, the heat exchanger is thus able to be controlled so as to emit heat to said passing exhaust gases, and the control unit is designed so as, in a second operating situation, to control the heat exchanger so that it emits heat to these passing exhaust gases while at the same time controlling said means to select a flow path in which the heat exchanger is arranged upstream of the catalytic converter, subject to the condition that the determined temperature is lower than a third predetermined level. Said third predetermined level is defined as a temperature level at which it is expected to take an unacceptably long time before the catalytic converter reaches a temperature that enables good catalytic action unless the exhaust gases are actively heated.

According to one embodiment of the invention, the exhaust system comprises a particle filter arranged in at least one of said at least two flow paths and designed so as to capture soot particles resulting from the combustion in the engine that are present in said exhaust gases while, according to another embodiment of the invention, said particle filter is arranged in at least one of said at least two flow paths upstream of the heat exchanger. It thus becomes possible, when regenerating the particle filter by supplying it with fuel, to cause the particles collected therein to burn, and thereby to retain the thermal energy thus generated by absorbing it in the heat exchanger, while at the same time preventing overly hot exhaust gases from reaching the surroundings. According to a further advancement of the embodiment, said particle filter is arranged in the first flow path between the catalytic converter and the heat exchanger. This flow path is preferably chosen in connection with regeneration of the particle filter, so that the resulting hot exhaust gases to not reach the catalytic converter and damage it. However, the possibility is not excluded that the particle filter is arranged in at least one of said at least two flow paths upstream of the catalytic converter, such as is the case in another embodiment of the invention, wherein the flow path could theoretically be used in the event that a regeneration of the particle filter is coordinated with an engine start in order to accelerate the temperature increase of the surfaces of the catalytic converter.

According to one embodiment of the invention, said means comprise a conducting coil with a catalytic converter and a heat exchanger arranged one after the other, wherein said means are designed so as to predefine said first and second flow paths by determining the direction in which the exhaust gases are to flow through said coil en route to the outlet. This entails a simple and thus cost-beneficial (only one catalytic converter and one heat exchanger are needed to realize two flow paths) and, most importantly, reliable way of realizing said alternative flow paths and the possibility of choosing between them. In the event that a particle filter is present, said coil can comprise such a particle filter connected in series with the catalytic converter and the heat exchanger, whereupon the particle filter is advantageously arranged in the coil between the catalytic converter and the heat exchanger.

The invention also concerns a method for processing exhaust gases from a combustion engine in a motor vehicle according to the accompanying independent method claims. The results of designing such a method and the method according to the embodiment defined in the accompanying non-independent method claims are presented with all desirable clarity in the foregoing description of the exhaust gas system according to the invention.

The invention also concerns a computer program exhibiting the features specified in claim 16, a computer program product exhibiting the features specified in claim 17, an electronic control unit exhibiting the features specified in claim 18, and a vehicle according to claim 19.

Other advantageous features and advantages of the invention are presented in the description below.

### BRIEF DESCRIPTION OF THE DRAWINGS

Exemplary embodiments of the invention are described below with reference to the accompanying drawings, in which:
- Fig. 1a: is a highly simplified view of a prior art exhaust system in a vehicle in the form of a goods vehicle,
- Fig. 1b: shows a known arrangement for converting thermal energy into mechanical energy,
- Fig. 2: is a schematic view of a part of an exhaust system according to a first embodiment of the invention,
- Fig. 3: is a view, corresponding to Fig. 2, of an exhaust system according to a second embodiment of the invention,
- Fig. 4 and Fig. 5: are views along A-A in Fig. 3 of the exhaust system in two different operating situations with two different alternative flow paths for the exhaust gases,
- Fig. 6: is a simplified drawing illustrating a potential realization of the inventive idea according to a third embodiment of the invention,
- Fig. 7: is a flow diagram that shows a method according to an embodiment of the invention, and
- Fig. 8: is a block diagram of an electronic control unit for implementing a method according to the invention.

### DETAILED DESCRIPTION OF EMBODIMENTS OF THE INVENTION

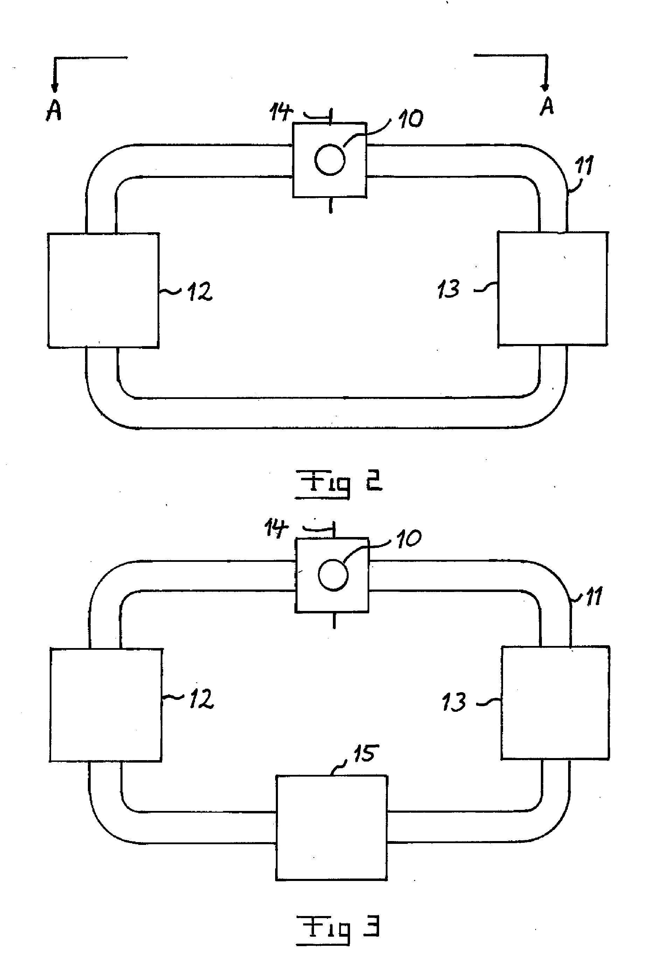

Fig. 2 shows a part of an exhaust system according to a first embodiment of the invention, in which the exhaust gases in a line 10 are conducted from a combustion engine (not shown) to a conducting coil 11 in which a catalytic converter 12 and a heat exchanger 13 are connected in series. Means in the form of a schematically indicated damper 14 are arranged in order to set the direction in which the exhaust gases are to run through the coil, so that a choice can be made as to whether the heat exchanger 13 is arranged downstream or upstream of the catalytic converter. The damper 14 is designed so as, once the exhaust gases have run through the coil, to guide them to continue in the direction toward an outlet to the surroundings of the vehicle, as is illustrated at 9 in Fig. 1.

Fig. 3 illustrates an exhaust system according to one embodiment of the invention that differs from the one shown in Fig. 2 only insofar as a particle filter 15 is arranged in said coil between the catalytic converter and the heat exchanger.

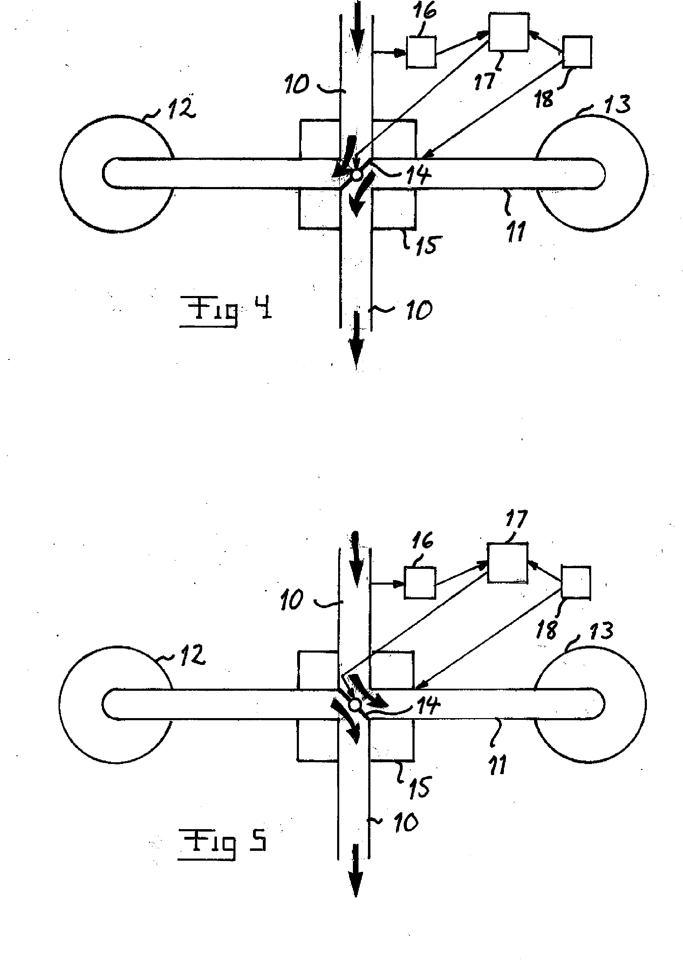

Fig. 4 and Fig. 5 illustrate how the two different flow paths defined by said coil can be achieved, and the way in which the choice of path can be made will now be described with reference to these figures. The exhaust system according to the invention comprises a schematically indicated element 16 for measuring the temperature of the exhaust gases arriving at the coil in the line 10. Information about the measured temperature is forwarded to a schematically indicated control unit 17 which, based on this information, preferably by means of suitable programming, and on other available data concerning the operation of the motor vehicle, has the ability to calculate the temperature of the surfaces of the catalytic converter and how said temperature will evolve during the continued operation of the combustion engine. It is noted again that the element 16 can be omitted and its function built into the control unit 17 or even into other equipment, such as a computer, on the vehicle. The control unit 17 is designed so as to control the damper 14 to select one of the two possible directions in which to conduct the exhaust gases through the coil. The figure also illustrates that the exhaust system comprises an element 18 for regenerating the particle filter 15, and that this element 18 is designed so as to send information regarding such regeneration to the control unit 17, so that it can take said information into account when controlling the damper 14. Fig. 4 illustrates how the control unit 17 controls the damper 14 so that the exhaust gases will pass through the coil in the order catalytic converter 12, particle filter 15 and heat exchanger 13 before they flow on in the line 10 downstream of the damper 14 toward the exhaust gas system outlet to the surroundings of the vehicle. Such a setting of the damper 14 can be suitable in the event that the temperature of the surfaces of the catalytic converter is within the temperature range that entails the optimum conversion, in the catalytic converter, of environmentally hazardous gases into less harmful gases as described above. The exhaust gases can then be cooled in the heat exchanger 13 during the absorption of waste heat to be converted into mechanical energy or electricity. This setting of the damper 14 could also be chosen in the event that the temperature of the surfaces of the catalytic converter is not yet high enough for good catalytic action but soon will be. This path can also be selected in the event that the particle filter is to be regenerated by supplying fuel to it so that the soot particles therein will burn, as the additional energy that is supplied to the exhaust gases thereby can then be recovered in the heat exchanger 13. Although a separate element 18 is shown for controlling the so-called active regeneration of the particle filter, this function can be built into the control unit 17 instead. Regeneration of the particle filter can also occur during normal driving, so-called passive regeneration, in that the exhaust gases from the engine become hot enough for such regeneration when, for example, driving on uphill stretches. Such passive regeneration can also be taken into account by the control unit so that it can make the appropriate choice of flow path for the exhaust gases.

The damper setting according to Fig. 5 defines a flow path through the coil in the order of the heat exchanger 13, particle filter 15 and catalytic converter 12. This flow path can, for example, be selected by the control unit when the temperature of the surfaces of the catalytic converter is at risk of becoming too high, so that thermal energy can be extracted from the exhaust gases in the heat exchanger 13 before the exhaust gases reach the catalytic converter, thereby extending the service life of the catalytic converter. This path could also be selected in the event that the temperature of the surfaces of the catalytic converter is too high and a regeneration of the particle filter 5 is to occur simultaneously, as in this event the exhaust gases will be heated to a high level in the particle filter when fuel is added to same in order to cause the soot particles captured therein to burn. This path could also be selected in the event that the temperature of the surfaces of the catalytic converter is too low and the heat exchanger 13 is of the thermoelectric type with the capability of being controlled so as to supply energy to the exhaust gases so that they can be heated via such a heat exchange process until the surfaces of the catalytic converter reach the desired temperature.

Consequently the control unit 17 can, by means of suitable programming and access to suitable operating data of the motor vehicle, its engine and the exhaust system, calculate the most suitable flow path through the coil for the exhaust gases at each point in time, as well as how the particle filter is to be controlled for the best possible results.

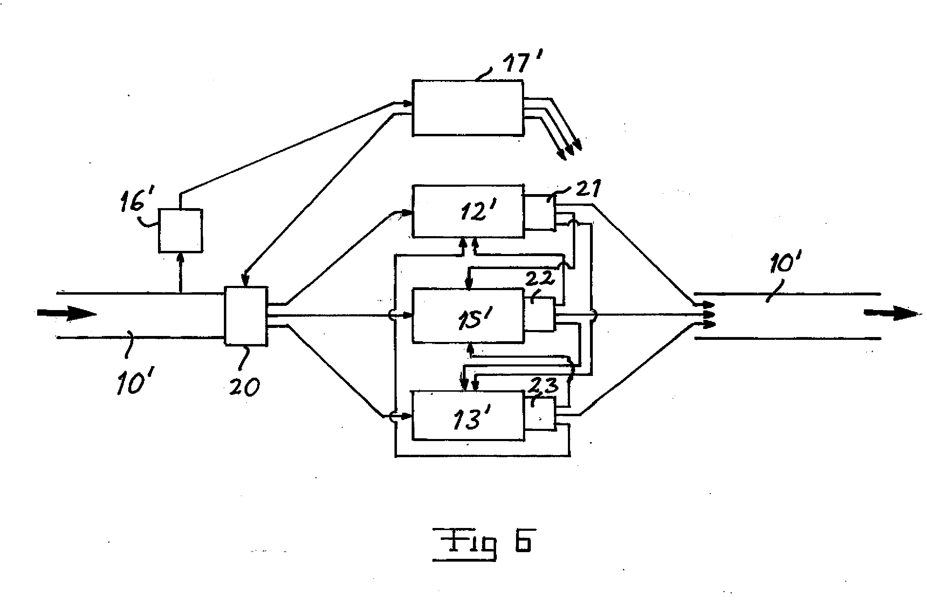

Fig. 6 illustrates how maximum flow path selectability can be achieved in an exhaust system according to a third embodiment of the invention, and the parts that are incorporated therein and correspond to parts of the embodiment according to Figs. 4 and 5 have been assigned the same reference designations, with the addition of '. In this embodiment there are four valves 20-23 that are controllable by the control unit 17' so as to send exhaust gases arriving thereat on in one of three possible directions, which means that the sequential order of the catalytic converter 12', the particle filter 15' and the heat exchanger 13' can be chosen arbitrarily, and the choice can be made that the exhaust gases are to pass through only two of them or one of them. The control unit should thus always control these valves in such a way that the exhaust gases at least pass through the catalytic converter 12'.

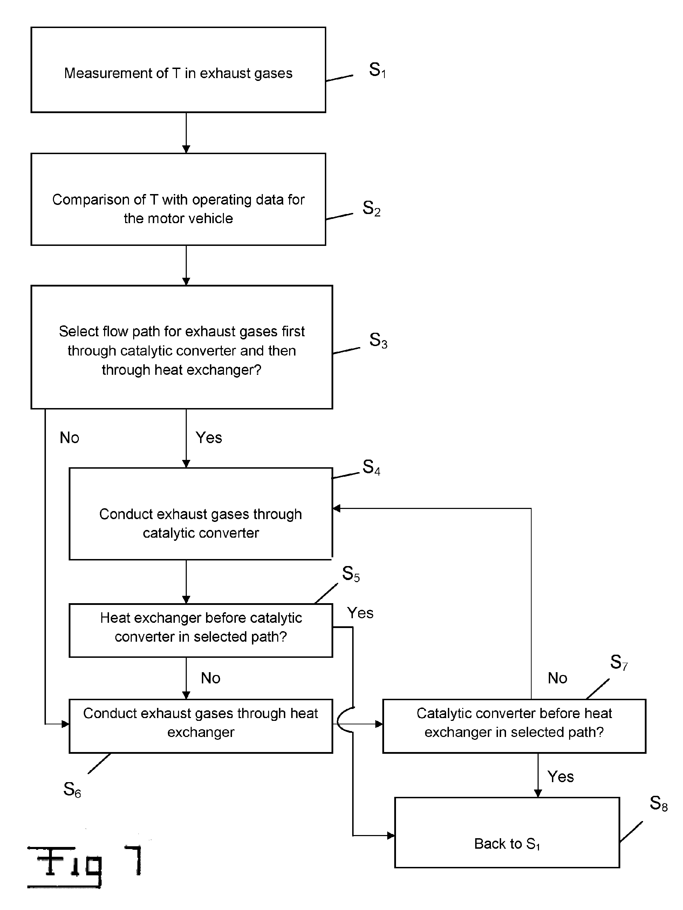

Fig. 7 shows a flow diagram that illustrates a method according to one embodiment of the invention for processing exhaust gases from a combustion engine in a motor vehicle by means of an exhaust system of the type shown in, among others, Figs. 3-5. In a first step S₁, the temperature T of the exhaust gases is measured at a suitable location in the system. This temperature is then compared with operating data for the vehicle in S₂, and a flow path is chosen on the basis thereof in step S₃. This choice involves two alternative orders for the steps subsequent thereto, i.e. S₆, S₇, S₄, S₅ and S₈, or S₄, S₅, S₆, S₇ and S₈. This process is advantageously carried out continuously for as long as the combustion engine of the vehicle is running.

Computer program code for implementing a method according to the invention is suitably included in a computer program that is readable into the internal memory of a computer, such as the internal memory of an electronic control unit in a motor vehicle. Such a computer program is suitably provided via a computer program product comprising a data storage medium that is readable by an electronic control unit, which data storage medium has the computer program stored thereon. Said data storage medium is, for example, an optical data storage medium the form of a CD-ROM disk, a DVD disk, a magnetic storage medium in the form of a hard drive, a diskette, a cassette tape etc, or a Flash memory or a memory of the ROM, PROM, EPROM or EEPROM type.

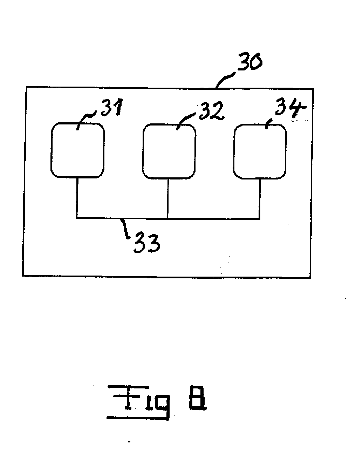

Fig. 8 highly schematically illustrates an electronic control unit 30 comprising an executing means 31, such as a central processing unit (CPU) for executing computer software. The executing means 31 communicate with a memory 32, for example of the RAM type, via a data bus 33. The control unit 30 also comprises a data storage medium 34, for example in the form of a Flash memory or a memory of the ROM, PROM, EPROM or EEPROM type. The executing means 31 communicate with the data storage medium 34 via the data bus 33. A computer program containing computer program code for implementing a method according to the invention, for example in accordance with the embodiment illustrated in Fig. 7, is stored on the data storage medium 34.

The invention is naturally in no way limited to the foregoing embodiments, but rather numerous possible modifications thereof will be obvious to one skilled in the art without deviating from the scope of the invention as it is defined in the accompanying claims.

For example, the particle filter could be omitted from the embodiment according to Fig. 6. It would also be possible to simplify the embodiment by reducing the number of possible flow paths in a manner that is deemed appropriate.

The catalytic converter could be arranged between the heat exchanger and the particle filter or the heat exchanger between the catalytic converter and the particle filter in an exhaust gas system of the type shown in Fig. 3.

## Claims

1. An exhaust system designed to be connected to a combustion engine (2) in a motor vehicle (1), wherein the system comprises
• an arrangement that defines a flow path for exhaust gases from the engine to an outlet (9) to the surroundings of the vehicle,
• at least one catalytic converter (12, 12') arranged in the flow path and having surfaces of a material with the ability to elicit the conversion of first gases in exhaust gases arriving thereat into other gases, and
• at least one heat exchanger (13, 13') with the ability to absorb heat from said passing exhaust gases, **characterized in that** said arrangement comprises means (14) for defining at least two alternative flow paths for exhaust gases from the engine to the outlet; a first with a said heat exchanger (13, 13') arranged downstream of the catalytic converter (12, 12') and a second with a said heat exchanger arranged upstream of the catalytic converter, an element (16, 16') designed so as to determine an operating parameter of the exhaust gas system and a control unit (17, 17') designed so as to receive data from said element and to control said means on the basis thereof so as to select one of said alternative flow paths in which to conduct exhaust gases.

2. An exhaust system according to claim 1, **characterized in that** said element (16, 16') is designed so as to determine an operating parameter in the form of a prevailing temperature in the exhaust system.

3. An exhaust system according to claim 2, **characterized in that** said element (16, 16') is designed so as to determine the temperature of exhaust gases in the area of the catalytic converter (12, 12'), and **in that** the control unit (17, 17') is arranged so as to compare the determined temperature with a first predetermined temperature level and, if the determined temperature exceeds said first temperature level, to control said means so as to select a specific one of said alternative flow paths.

4. An exhaust system according to claim 2 or 3, **characterized in that** said element (16, 16') is designed so as to determine the temperature of exhaust gases in the area of the catalytic converter (12, 12'), and **in that** the control unit (17, 17') is arranged so as to compare the determined temperature with a second predetermined temperature level and, if the determined temperature is lower than said second temperature level, to control said means so as to select a specific one of said alternative flow paths.

5. An exhaust system according to claims 3 and 4, **characterized in that** the control unit (17, 17') is designed so as, in a first operating situation, to control the heat exchanger (13, 13') so as to absorb heat from said passing exhaust gases and to control said means (14) so as to select said second flow path at a determined measured temperature exceeding the first predetermined level, and so as to select said first flow path when the determined temperature is below said second predetermined level.

6. An exhaust system according to claims 3 and 4, **characterized in that** the heat exchanger (13, 13') can be controlled so as to emit heat to said passing exhaust gases, and **in that** the control unit (17, 17') is designed so as, in a second operating situation, to control the heat exchanger so as to emit heat to said passing exhaust gases and simultaneously control said means (14) so as to select a flow path in which the heat exchanger is arranged upstream of the catalytic converter, subject to the condition that the measured temperature is lower than a third predetermined level.

7. An exhaust system according to any of the preceding claims, **characterized in that** it comprises a particle filter (15, 15') arranged in at least one of said at least two flow paths and designed so as to capture soot particles resulting from the combustion in the engine that are present in said exhaust gases.

8. An exhaust system according to claim 7, **characterized in that** a said particle filter (15, 15') is arranged in at least one of said at least two flow paths upstream of the heat exchanger (13, 13').

9. An exhaust system according to claim 8, **characterized in that** a said particle filter (15, 15') is arranged in the first flow path between the catalytic converter (12, 12') and the heat exchanger (13, 13').

10. An exhaust system according to claim 7 or 8, **characterized in that** a said particle filter (15, 15') is arranged in at least one of said at least two flow paths upstream of the catalytic converter (12, 12').

11. An exhaust system according to any of the preceding claims, **characterized in that** said means comprise a conducting coil (11) with a catalytic converter (12) and a heat exchanger (13) arranged one after the other and **in that** said means are designed so as to define said first and second flow path by determining the direction in which the exhaust gases are to flow through said coil en route to the outlet.

12. An exhaust system according to claim 11, **characterized in that** said coil (11) comprises a said particle filter (15) connected in series with the catalytic converter (12) and the heat exchanger (13).

13. An exhaust system according to claim 12, **characterized in that** said particle filter (15) is arranged in the coil (11) between the catalytic converter (12) and the heat exchanger (13).

14. A method for processing exhaust gases resulting in a combustion engine of a motor vehicle while conducting said exhaust gases from the combustion engine (2) to an outlet (9) to the surroundings of the vehicle, which method comprises the following steps of:
a) conducting the exhaust gases through a catalytic converter (12, 12') having surfaces of a material with the ability to elicit conversion of first gases in exhaust gases arriving thereat into other gases, and
b) conducting said exhaust gases through a heat exchanger (13, 13') for transferring thermal energy between the exhaust gases and a medium,
**characterized in that** it comprises a step c) of determining an operating parameter of said exhaust system and a step d) of determining the order of step a) and step b) on the basis of the determined magnitude of said operating parameter and controlling steps a) and b) according to said determined order.

15. A method according to claim 14, **characterized in that** it comprises an additional step of:
e) conducting said exhaust gases through a particle filter (15, 15') designed so as to capture soot particles resulting from the combustion in the engine that are present in the exhaust gases, and **in that** step d) comprises determining the order of the steps a), b) and e) on the basis of the determined value of said operating parameter.

16. A computer program that is loadable directly into the internal memory of a computer, which computer program contains computer program code for causing the computer, for a motor vehicle equipped with a combustion engine (2) and an exhaust system with a line for exhaust gases from the combustion engine to an outlet (9) to the surroundings of the vehicle, a catalytic converter (12, 12') arranged along said line and having surfaces of a material with the ability to elicit conversion of first gases in gases arriving thereat into other gases, and a heat exchanger (13, 13') arranged along said line for transferring thermal energy between the exhaust gases and a medium:
- to determine an operating parameter of the exhaust system,
- to determine, on the basis of the magnitude of said determined operating, the sequential order in which the exhaust gases are to pass through the catalytic converter (12, 12') and the heat exchanger (13, 13') and
- to control means (14) for defining alternative flow paths for the exhaust gases so as to select a flow path that is consistent with said determined sequential order.

17. A computer program product containing a data storage medium that is readable by a computer, wherein the computer program code of a computer program according to claim 16 is stored on the data storage medium.

18. An electronic control unit in a motor vehicle, which electronic control unit comprises executing means (31), a memory (32) connected to said executing means and a data storage medium (34) connected to said executing means, wherein the computer program code of a computer program according to claim 16 is stored on said data storage means.

19. A motor vehicle, particularly a wheel-borne motor vehicle, especially a goods vehicle or a bus, **characterized in that** it comprises an exhaust system according to any of claims 1-13.
